# EUROPÄISCHE PATENTSCHRIFT

(11) **EP 0 551 664 B1**
(45) Veröffentlichungstag und Bekanntmachung des Hinweises auf die Patenterteilung: **15.11.1995**
(21) Anmeldenummer: 92122180.0
(22) Anmeldetag: 31.12.1992
(51) Int. Cl.: H02G 3/06

(54) **Kabelverschraubung mit einer Schraubhülse und Klemmfingern, deren Hüllkurve in Gebrauchsstellung unrund ist**
Screwing device for cable with a screw bush and clamping fingers, the envelope curve of which in functional position is not round
Elément de vissage pour câble avec une douille de vissage et des doigts d'encrage dont la courbe enveloppe en position d'utilisation n'est pas arrondie

(30) Priorität: 11.01.1992 DE 4200549
(43) Veröffentlichungstag der Anmeldung: 21.07.1993
(73) Patentinhaber: Anton Hummel Verwaltungs-GmbH, D-79183 Waldkirch (DE)
(72) Erfinder: Gehring, Peter, W-7809 Simonswald (DE)
(74) Vertreter: Schmitt, Hans, Dipl.-Ing.

(56) Entgegenhaltungen:
- DE-C- 4 011 024
- US-A- 4 600 803

## Beschreibung

Die Erfindung betrifft eine Kabelverschraubung mit einer Schraubhülse, einer damit verbindbaren Gegenhülse oder dergleichen Druckstück, insbesondere Überwurfmutter, und mit einem mit Hilfe der Gegenhülse gegen das Kabel oder den Schutzschlauch preßbaren Klemmeinsatz, wobei die Gegenhülse den Klemmeinsatz mit einer im wesentlichen ringartigen Druckfäche zumindest an einer der Stirnseiten beaufschlagt oder übergreift und beim Anziehen des Gewindes mit einer sich verjüngenden Form, zum Beispiel mittels Rundung oder mittels eines Konus, welche in der Schraubhülse oder anstelle-der ringartigen Druckfläche in der Gegenhülse angeordnet ist, einen mit axialen, an der Stirnseite mündenden Schlitzen versehenen, Klemmfinger bildenden Bereich des Klemmeinsatzes radial gegen das Kabel oder dergleichen hin verformt, wobei zwischen Klemmeinsatz und Kabel gegebenenfalls eine Dichtung angeordnet ist, die von den durch die Schlitze an dem Klemmeinsatz gebildeten Klemmfingern durch deren radiale Verformung gegen das Kabel anpreßbar ist, und wobei die Hüllkurve der Innenseiten der Querschnitte der Klemmfinger in Gebrauchsstellung unrund ist.

Eine derartige Kabelverschraubung ist aus der DE-PS 34 18 978 bekannt. Die unrunde Hüllkurve an den Innenseiten der Klemmfinger ergibt sich dabei dadurch, daß unter der Einwirkung des Druckes der Überwurfmutter mindestens ein Klemmfinger selektiv eine stärkere Annäherung an das eingeführte Kabel erfährt als die übrigen Klemmfinger, so daß insgesamt eine eckige oder unrunde Konfiguration entsteht. Dadurch wird einerseits eine Zugentlastung bewirkt, andererseits aber auch eine Verdrehsicherheit an dem eingeklemmten Kabel oder Schutzschlauch erzeugt. Dies macht allerdings gemäß der DE-PS 34 18 978 jeweils unterschiedliche Schrägungsrichtungen der Schlitze zwischen den Klemmfingern und unterschiedliche radiale Dicken der einzelnen Klemmfinger notwendig.

Eine Lösung, bei welcher alle Schlitze zwischen den Klemmfingern in gleicher Richtung geneigt sind, zeigt die DE-PS 40 11 024 C1. Die in Gebrauchsstellung unrunde Hüllkurve wird dabei dadurch erzeugt, daß die Druckfläche in ihrem Verlauf bereichsweise in radialer Richtung oval gewölbt ist, so daß die Klemmzungen in Gebrauchsstellung ungleichmäßig zusammengepreßt werden. Dies führt zu unterschiedlichen Wandstärken an der beim Anziehen und in Gebrauchsstellung erheblichen Reaktionskräften ausgesetzten Druckschraube und bewirkt im Bereich der ovalen Ausformung eine nur lockere Anpressung der Klemmfinger, so daß unter Umständen die Zugentlastung auf Kosten der Verdrehsicherung geht.

Der Erfindung liegt die Aufgabe zugrunde, eine Kabelverschraubung der eingangs erwähnten Art zu schaffen, die bei einfacher Herstellung die Vorteile einer stabilen Überwurfmutter oder dergleichen Gegenhülse und einer guten Zugentlastung beibehält und dennoch auf einfache Weise auch eine Verdrehsicherung des Kabels oder Schutzschlauches bewirkt.

Zur Lösung dieser Aufgabe ist die gattungsgemäße Kabelverschraubung dadurch gekennzeichnet, daß an der die sich verjüngende Form aufweisenden Druckfläche zur Bildung der unrunden Hüllkurve der Klemmfinger zumindest ein Verformungskörper gegenüber dieser Druckfläche vorspringt, der in Gebrauchsstellung wenigstens einen Klemmfinger radial mehr oder stärker als einen oder die außerhalb des Bereiches des Verformungskörpers angeordneten Nachbarfinger nach innen verformt festlegt.

Es kann also eine Überwurfmutter oder ein Druckstück bisheriger Stabilität und Festigkeit Verwendung finden, weil lediglich durch einen zusätzlichen, an der Druckfläche vorspringenden Verformungskörper ein oder mehrere ausgewählte Klemmfinger gegenüber den Nachbarfingern radial stärker verformt werden können, um die Verdrehsicherheit eines Kabels zusätzlich zu der guten Zugentlastung zu bewirken. Dies hat außerdem den Vorteil, daß der Herstellungsaufwand gegenüber Kabelverschraubungen ohne Verdrehsicherheit praktisch nicht vergrößert wird und die Kabelverschraubung auch alle Maßnahmen für eine bestmögliche Zugentlastung aufweisen kann.

Zweckmäßig ist es, wenn der gegenüber der - insbesondere konischen - Druckfläche vorspringende Verformungskörper einen schrägen oder allmählichen Übergang von der Druckfläche zu seiner höchsten Erhebung aufweist, welcher Übergang entgegen der Drehrichtung beim Anziehen des Gewindes ansteigt. Der Verformungskörper hat also einen Übergang, der von einem in Drehrichtung vorderen Anfang aus ansteigt, so daß die verstärkte radiale Verformung eines oder mehrerer Klemmfinger praktisch stufenlos beim Anziehen des Gewindes der Gegenhülse erfolgen kann.

Eine Ausführungsform kann dabei vorsehen, daß der Verformungskörper eine gegenüber der Ringform der Druckfläche radial nach innen abweichende Oberfläche hat, die gegenüber der umlaufenden Ringform der Druckfläche einen größeren Krümmungsradius hat oder als im Querschnitt gesehen geradlinige Sekante oder Abflachung oder mit entgegengesetzter Krümmung ballig ausgebildet ist. Insbesondere eine geradlinige Sekante oder Abflachung kann sehr einfach an der sonst ringförmigen Innenkontur der Druckfläche vorgesehen werden und in diesem Bereich zu einer verstärkten radialen Verformung einzelner Klemmfinger führen.

Eine andere Möglichkeit besteht darin, daß der Verformungskörper als teilkugelförmige Erhöhung oder als etwa radial verlaufender Steg mit in Drehrichtung bogenförmigem Querschnitt ausgebildet ist. In diesem Falle ist der Verformungskörper also quer zum Verlauf der ringförmigen Druckfläche angeordnet und kann bei deren Verdrehung beim Anziehen der Gegenhülse wiederum einen oder mehrere Klemmfinger stärker als die übrigen radial verformen.

Für eine verstärkte radiale Verformung insbesondere mehrerer einander benachbarter Klemmfinger ist es zweckmäßig, wenn der Verformungskörper in Umfangsrichtung der ringförmigen Druckfläche verlaufend in Draufsicht etwa oval oder eiförmig und/oder mit gemäß der Zunahme der Erhöhung auch in der Breite zunehmender Form ausgebildet ist. Dabei ist es auch möglich, daß der Verformungskörper als etwa in Umfangsrichtung der Druckfläche verlaufender Wulst ausgebildet ist, dessen zumindest in Drehrichtung beim Festschrauben vorne befindlicher Bereich schräg oder gerundet von der Druckfläche zu der größten Höhe des Verformungskörpers übergeht.

Eine weitere Ausgestaltung der Erfindung kann darin bestehen, daß mehrere jeweils gleich oder unterschiedlich geformte Verformungskörper am Umfang der konischen Druckfläche gleichmäßig oder mit unterschiedlichen Abständen zueinander angeordnet sind. Zum Beispiel können mehrere Abflachungen einander benachbart sein, wobei dies so weit gehen kann, daß die Druckfläche ein Vieleck bildet, welches dann zu einer entsprechend vieleckigen Kontur der Innenseiten der verformten Klemmfinger führt.

Denkbar wäre zwar, daß der oder die Verformungskörper als separates Teil in die Kabelverschraubung eingefügt werden, günstiger ist es jedoch, wenn der/die Verformungskörper einstückig aus der Druckfläche vorstehen, also bei der Fertigung schon mitentstehen.

Eine zusätzliche Funktion des oder der Verformungskörper läßt sich erreichen, wenn der/die Verformungskörper an ihrer in Drehrichtung beim Festschrauben rückwärtigen Seite steil, insbesondere etwa unter 90 Grad oder unter spitzem Winkel gegenüber der Oberfläche und Oberseite des Verformungskörpers abfällt(abfallen). Die dabei an der Oberseite gebildete Kante kann nämlich dann als Verdrehsicherung gegenüber den Klemmfingern und ihren Schlitzen dienen, wenn die Gegenhülse oder Überwurfmutter angezogen ist.

Dabei ist es zweckmäßig, wenn der steile Abfall des Verformungskörpers etwa parallel zu einer Durchmesserebene seitlich zu dieser versetzt angeordnet ist und eine durch seinen Bereich verlaufende Radialebene schräg schneidet. Dies ergibt dann eine Anpassung an den schrägen Verlauf der Schlitzquerschnitte zwischen den einzelnen Klemmfingern, so daß die Verdrehsicherung besser wirksam wird.

Eine zusätzliche oder auch alternative Möglichkeit, in Gebrauchsstellung an der Innenseite der Klemmfinger unrunde Hüllkurven zu haben und somit unrunde Verformungen der Kabel- oder Schlauchoberfläche zu bewirken, kann darin bestehen, daß die Klemmfinger an ihren der Kabeloberfläche oder Schlauchoberfläche zugewandten Innenseiten und/oder ihren der Druckfläche zugewandten Außenseiten untereinander Formabweichungen der Gestalt haben, daß die Hüllkurve der Innenseiten der Querschnitte der Klemmfinger zumindest in verformter Position unrund ist und/oder daß der Schlitz zwischen wenigstens zwei einander benachbarten Klemmfingern breiter als zwischen den übrigen Klemmfingern ist. Beide Maßnahmen führen bei der radialen Verformung der Klemmfinger dazu, daß eine unrunde Innenkontur der Klemmfingerinnenseiten entsteht und somit Kabel oder Schlauch unrund eingeklemmt und gegen Verdrehen gesichert werden. Vor allem bei Kombination dieser Maßnahme mit den vorbeschriebenen Möglichkeiten, an der Druckfläche der Gegenhülse oder Überwurfmutter einen oder mehrere Verformungskörper vorzusehen, können unterschiedliche Grade der Verdrehsicherheit erreicht werden.

Nachstehend sind mehrere Ausführungsbeispiele der Erfindung anhand der Zeichnung näher beschrieben. Es zeigt in zum Teil schematisierter Darstellung:
- Fig.1: einen Längsschnitt einer erfindungsgemäßen Kabelverschraubung in Gebrauchsstellung, wobei ein Klemmfinger durch einen höckerartigen Verformungskörper an der Druckfläche der Überwurfmutter radial stärker als die übrigen verformt ist.
- Fig.2: einen Querschnitt der Kabelverschraubung gemäß Fig.1 durch den an der Druckfläche der Überwurfmutter befindlichen Höcker und teilweise den von ihm stärker verformten Klemmfinger, gemäß Linie A-B,
- Fig.3: einen der Fig.2 entsprechenden Querschnitt einer abgewandelten Ausführungsform mit zwei einander auf einem Durchmesser etwa gegenüberliegenden Verformungskörpern,
- Fig.4: einen Querschnitt einer Kabelverschraubung mit einem in Umfangsrichtung langgezogenen Verformungskörper, der allmählich von der Druckfläche aus zu seiner größten Höhe ansteigt und einen steilen Abfall als zusätzliche Verdrehsicherung aufweist,
- Fig.5: eine erfindungsgemäße Kabelverschraubung mit einem an der Druckfläche vorgesehenen Verformungskörper vor ihrer Montage, wobei die einzufügende Dichtung einen Wulstrand hat,
- Fig.6: eine der Fig.5 entsprechende Darstellung mit einer Dichtung ohne Wulstrand,
- Fig.7: eine Stirnansicht und
- Fig.8: einen Längsschnitt einer Überwurfmutter einer erfindungsgemäßen Kabelverschraubung, wobei an der Druckfläche in unregelmäßigem Abstand zwei etwa nierenförmige Höcker oder Verformungskörper vorgesehen sind,
- Fig.9: eine Stirnansicht und
- Fig.10: einen Längsschnitt einer Überwurfmutter mit drei etwa ovalen oder eiförmigen, gleichmäßig am Umfang verteilten höckerartigen Verformungskörpern,
- Fig.11: eine Stirnansicht in eine Überwurfmutter und auf deren Druckfläche und
- Fig.12: einen Querschnitt, wobei zwei Verformungskörper ähnlich denen gemäß Fig.9 vorgesehen sind, die einen steilen Abfall als Rastfläche aufweisen,
- Fig.13: eine Ansicht der Druckfläche einer Überwurfmutter mit einem gegenüber der Krümmung der Druckfläche gegensinnig ballig gekrümmten Verformungskörper,
- Fig.14: einen Längsschnitt der Überwurfmutter gemäß Fig.13,
- Fig.15: eine Ausführungsform analog der der Fig.13, wobei ballige Verformungskörper jeweils unmittelbar aneinander anschließen und gleichmäßig am Umfang verteilt sind,
- Fig.16: eine Ansicht der Druckfläche mit einem Verformungskörper mit flacher Wirkfläche, die sekantenartig gegenüber der Innenkontur der Druckfläche vorsteht,
- Fig.17: einen Längsschnitt der Überwurfmutter gemäß Fig.16,
- Fig.18: eine Ausführungsform, bei welcher die Druckfläche aneinandergereihte Abflachungen aufweist, die insgesamt eine achteckige Kontur bilden,
- Fig.19: eine Ansicht und
- Fig.20: einen Längsschnitt einer Überwurfmutter, bei welcher ein Verformungskörper in Form eine Kugelabschnittes an der Druckfläche vorgesehen ist,
- Fig.21: eine Ansicht und
- Fig.22: einen Längsschnitt einer Überwurfmutter, an deren Druckfläche drei wulstförmige, radial nach außen verlaufende Verformungskörper gleichmäßig verteilt vorgesehen sind,
- Fig.23: eine Ansicht und
- Fig.24: einen Längsschnitt einer Überwurfmutter, an deren Druckfläche gegenüber einem radialen Verlauf gekrümmte wulstförmige Höcker oder Verformungskörper angeordnet sind,
- Fig.25: eine Ansicht und
- Fig.26: einen Längsschnitt einer Überwurfmutter, an deren Druckfläche ein kugelsegmentförmiger Höcker als Verformungskörper vorgesehen ist, der zur Bildung einer Rastfläche an seiner Rückseite abgeschnitten ist,
- Fig.27: eine Ansicht und
- Fig.28: einen Längsschnitt einer Überwurfmutter, an deren Druckfläche kometenförmige langgezogene Verformungskörper vorgesehen sind, die sowohl bezüglich ihres Anstieges als auch ihrer Verbreiterung allmählich zunehmen,
- Fig.29: eine Ansicht und
- Fig.30: einen Längsschnitt einer Überwurfmutter gemäß Fig.27, wobei drei etwa kometenförmige Verformungskörper gleichmäßig verteilt und unmittelbar einander benachbart vorgesehen sind,
- Fig.31: eine Stirnansicht eines Klemmeinsatzes mit Klemmfingern, die zum Teil voneinander verschiedene radiale Maße haben, so daß die Hüllkurve ihrer Innenkontur von der Kreisform abweicht,
- Fig.32: eine Stirnansicht eines Klemmeinsatzes, bei welchem zwei Klemmfinger gegenüber den übrigen eine größere Breite haben und somit gegenüber den übrigen Klemmfingern ein abgewandeltes Verformungsverhalten haben.
- Fig.33: eine teilweise im Längsschnitt gehaltene Seitenansicht und
- Fig.34: eine Stirnansicht eines Klemmeinsatzes, bei welchem einzelne Klemmfinger an ihrer Außenseite mit größerem Krümmungsradius von ihrer Stirnseite in ihre Außenseite übergehen als die übrigen Klemmfinger und dadurch weniger als diese radial nach innen verformbar sind,
- Fig.35: eine teilweise im Schnitt gehaltene Seitenansicht und
- Fig.36: eine Stirnansicht eines Klemmeinsatzes, bei welchem zwischen einzelnen Klemmfingern breitere Schlitze als zwischen den übrigen angeordnet sind.

Bei den nachfolgenden unterschiedlichen Ausführungsbeispielen sind übereinstimmende oder einander funktional entsprechende Teile mit übereinstimmenden Bezugszeichen versehen.

Eine im ganzen mit 1 bezeichnete Kabelverschraubung weist eine Schraubhülse 2 und eine damit verbindbare Gegenhülse, in den Ausführungsbeispielen eine Überwurfmutter 3 auf. Ferner erkennt man einen mit Hilfe der Gegenhülse oder Überwurfmutter 3 gegen ein Kabel 4 oder einen Schutzschlauch preßbaren Klemmeinsatz 5, der aus einzelnen Klemmfingern 6 besteht.

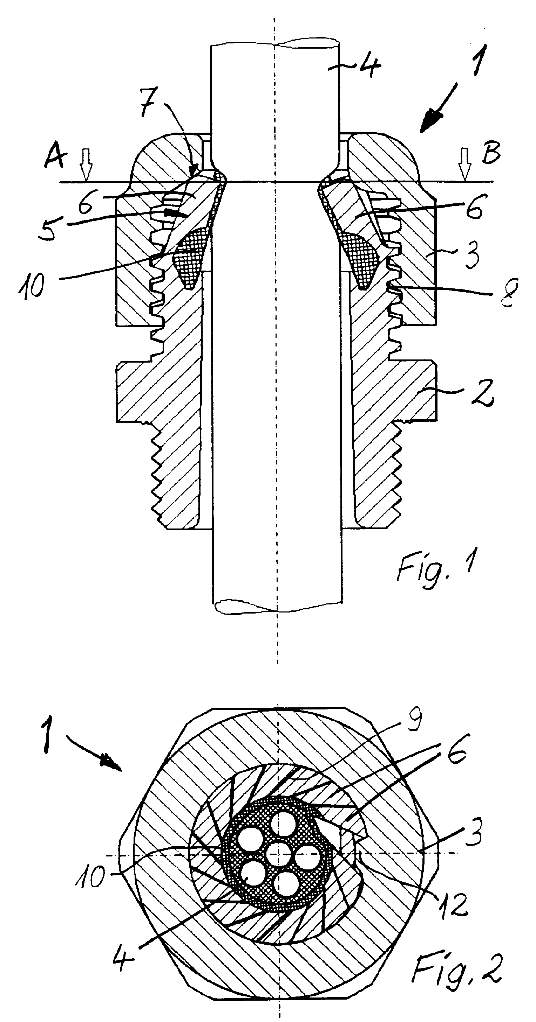

Die Gegenhülse oder Überwurfmutter 3 beaufschlagt den Klemmeinsatz 5 mit einer im wesentlichen ringartigen, an ihrer Innenseite umlaufenden Druckfläche 7 an der Stirnseite, wie man es vor allem in Fig.1 erkennt. Die Druckfläche 7 übergreift dabei die Stirnseite der Klemmfinger 6 und bewirkt beim Anziehen des Gewindes 8 mit Hilfe ihrer sich in axialer Richtung verjüngenden Form, zum Beispiel mittels Rundung oder Konus, daß die Klemmfinger 6 in der in Fig.1 erkennbaren Weise radial nach innen verschwenkt und verformt werden. Dies ist möglich, weil zwischen den Klemmfingern 6 axiale, an den Stirnseiten mündende Schlitze 9 vorgesehen sind, welche die Klemmfinger voneinander trennen und deren radiale Verformung gegen das Kabel 4 ermöglichen, wobei gemäß Fig.1 bis 4 die Kabeloberfläche entsprechend verformt wird.

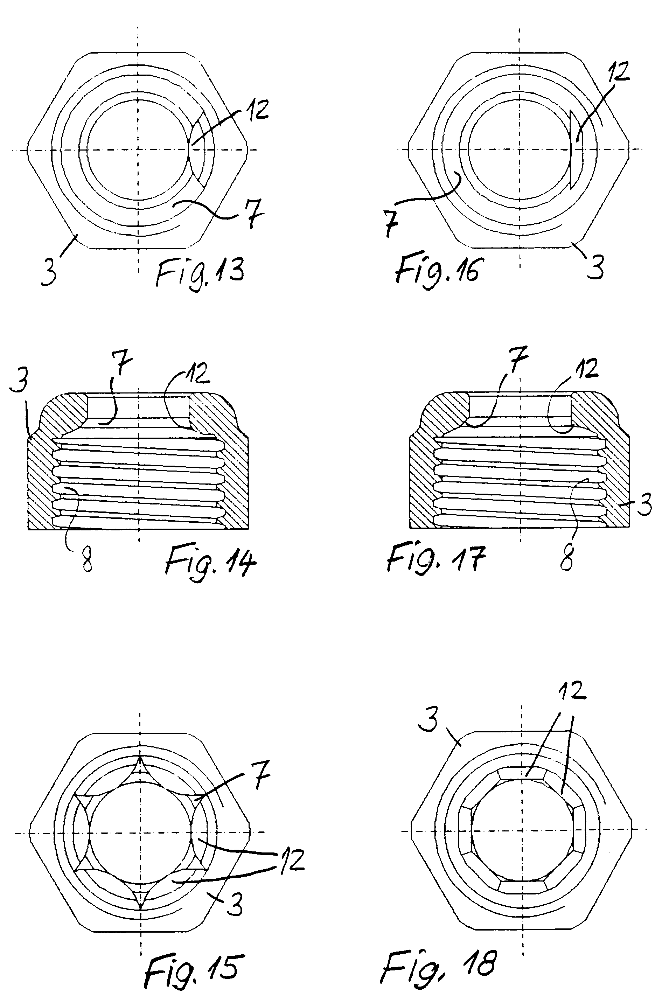

Zwischen Klemmeinsatz 5 und Kabel 4 ist im Ausführungsbeispiel eine Dichtung 10 angeordnet, die von den durch die Schlitze 9 an dem Klemmeinsatz 5 gebildeten Klemmfingern 6 durch deren radiale Verformung gegen das Kabel 4 anpreßbar ist, wobei gemäß Fig.5 und 6 die Form der Dichtung 10 jeweils verschieden sein kann. Die Dichtung 10 nach Fig.5 hat einen Wulst 11, der eine axiale Festlegung gegenüber den Stirnseiten der Klemmfinger 6 ermöglicht, während die Dichtung 10 gemäß Fig.6 ohne einen solchen Wulst ausgebildet ist.

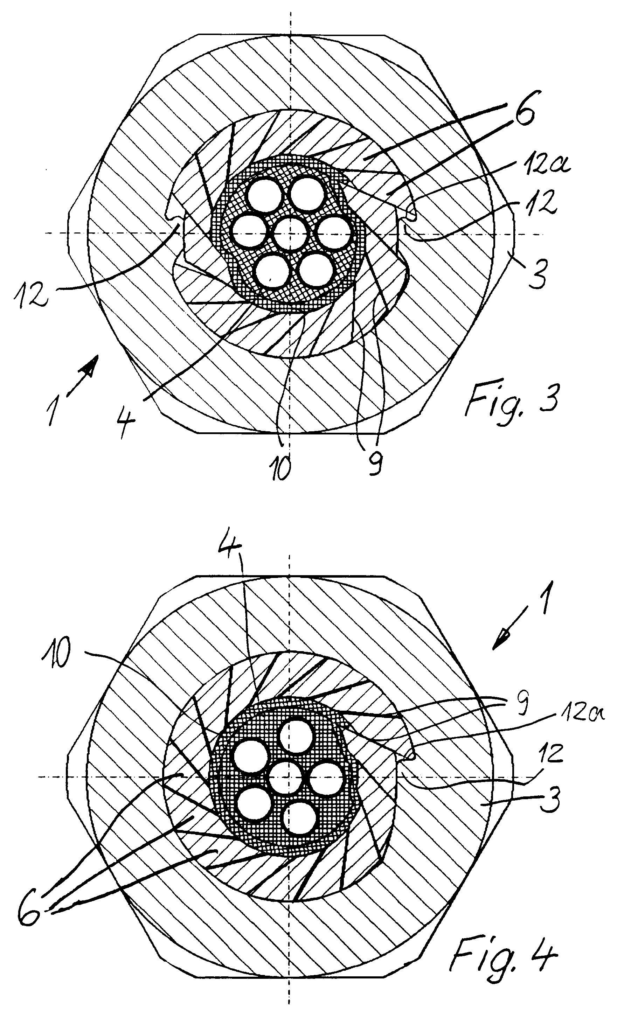

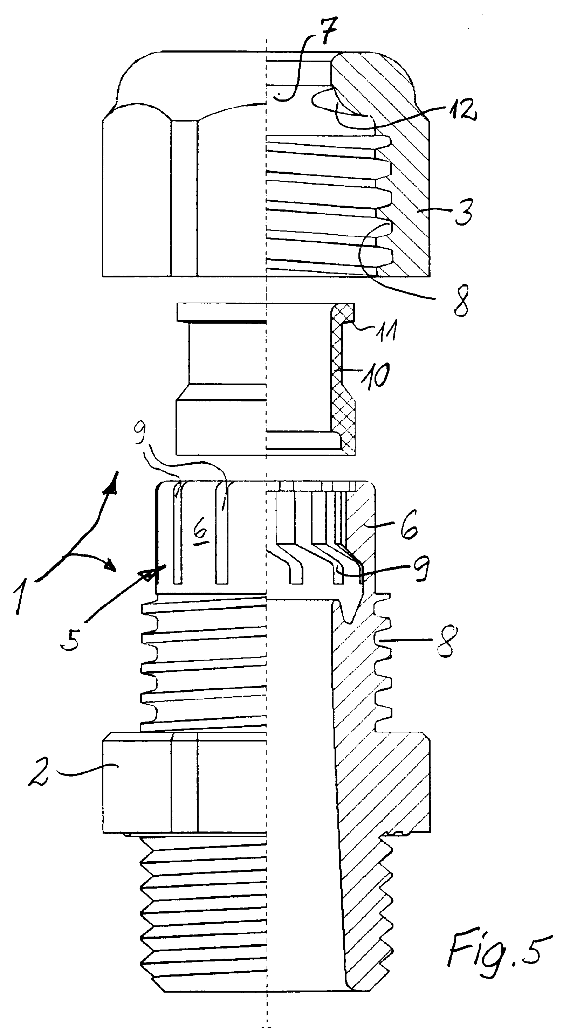

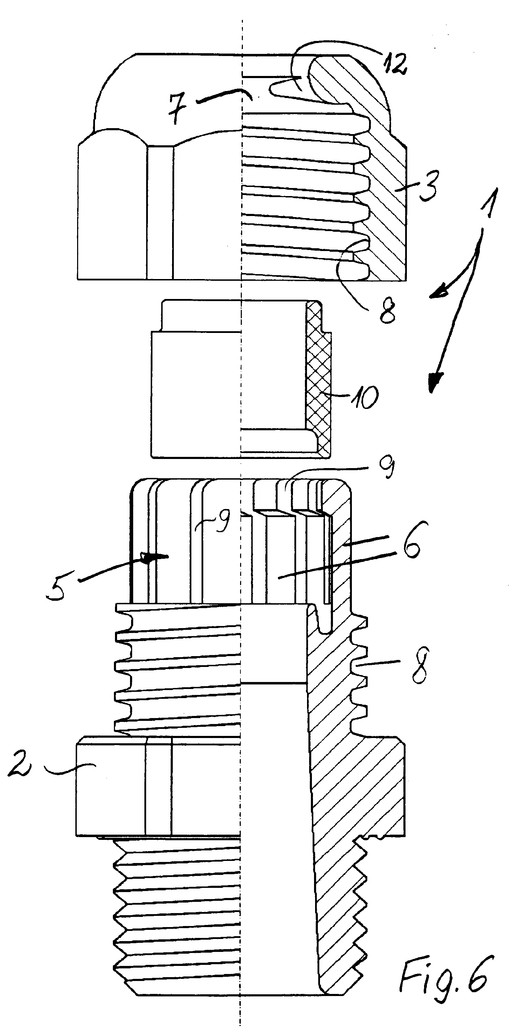

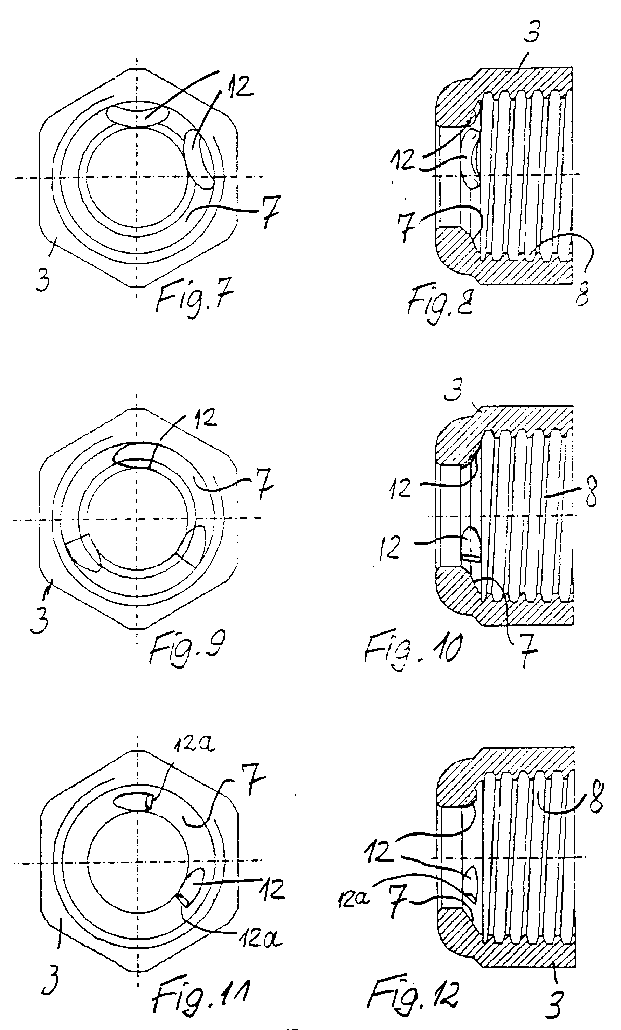

In noch zu beschreibender Weise ist die zum Beispiel anhand der Figuren 2 bis 4 erkennbare Hüllkurve der Innenseiten der Querschnitte der Klemmfinger 6 in Gebrauchsstellung unrund, um neben der Zugentlastung des Kabels 4 auch dessen Verdrehsicherung zu bewirken. Dabei ist in allen Ausführungsbeispielen gemäß den Figuren 1 bis 30 vorgesehen, daß an der die sich verjüngende Form aufweisenden Druckfläche 7 zumindest ein Höcker oder Verformungskörper 12 angeordnet ist, welcher gegenüber dieser Druckfläche 7 vorspringt und der dabei eine solche Größe und Ausdehnung hat, daß er wenigstens einen Klemmfinger 6 mehr oder stärker als einen oder die außerhalb des Bereiches des Verformungskörpers 12 angeordneten Nachbarfinger radial nach innen verformt und festlegt. Vor allem anhand der Figuren 2 bis 4 wird die Funktion eines solchen Verformungskörpers 12 deutlich, der gemäß Fig.2 in seiner in Umfangsrichtung liegenden Breite etwa der eines Klemmfingers entsprechen kann, während er gemäß Fig.4 auch mehrere Klemmfinger - aufgrund einer schrägen Übergangsfläche - unterschiedlich stark erfassen kann. Die unrunde Hüllkurve in verformter Position erkennt man dabei deutlich durch die Oberfläche der Dichtung 10, die entweder an einer Stelle (Fig.2) oder an Zwei einander gegenüberliegenden Stellen (Fig.3) gegenüber einer Kreisform stärker eingedrückt sein kann.

Vor allem Fig.4 verdeutlicht, daß der gegenüber der Druckfläche 7 vorspringende Verformungskörper 12 einen schrägen oder allmählichen Übergang von der Druckfläche 7 beziehungsweise deren Niveau aus zu seiner höchsten Erhebung aufweisen kann, wobei dieser Übergang entgegen der Drehrichtung beim Anziehen des Gewindes ansteigt, so daß also der in Drehrichtung vorderste Anfang dieses Verformungskörpers 12 auch die geringste Höhe gegenüber der Druckfläche hat. Somit erfolgt die Verformung der Klemmfinger und vor allem auch die stärkere Verformung der mehr nach innen verformten Klemmfinger allmählich und vergrößert das erforderliche Drehmoment beim Anziehen der Überwurfmutter 3 nur unwesentlich.

In den Figuren 7 bis 30 sind unterschiedliche Möglichkeiten der Formgebung des Höckers oder Verformungskörpers 12 und auch unterschiedliche Anzahlen solcher Verformungskörper 12 dargestellt und in der Figurenaufzählung schon angegeben. Sie können je nach Material des einzuklemmenden Kabels 4 oder Schlauches gewählt werden, um auch unterschiedliche Abmessungen eines Kabels 4 berücksichtigen zu können, wobei unter Umständen mehrere Kabelgrößen für ein und dieselbe Kabelverschraubung 1 zu berücksichtigen sind.

In Fig.7 und 8 erkennt man zwei etwa nierenförmige Verformungskörper 12, die relativ nah beieinander angeordnet sind.

Fig.9 u.10 zeigt eine Überwurfmutter 3, an deren Druckfläche 7 drei etwa eiförmige oder einem Rugby-Ball ähnelnde Verformungskörper 12 etwa gleichmäßig verteilt sind.

Der oder die Verformungskörper 12, die in allen Ausführungsbeispielen einstückig aus der Druckfläche 7 vorstehen, können an ihrer in Drehrichtung beim Festschrauben rückwärtigen Seite 12a steil, insbesondere etwa unter 90 Grad (Fig.4) oder sogar unter spitzem Winkel (Fig.3) gegenüber der Oberfläche und Oberseite des Verformungskörpers 12 abfallen, um so zusätzlich eine Rastkante als Sicherung der Schließstellung der Überwurfmutter 3 zu bilden.

Fig.11 u.12 zeigen ein Ausführungsbeispiel, bei welchem die Verformungskörper 12 gemäß Fig.9 mit einem solchen steilen Abfall 12a abgeschnitten sind.

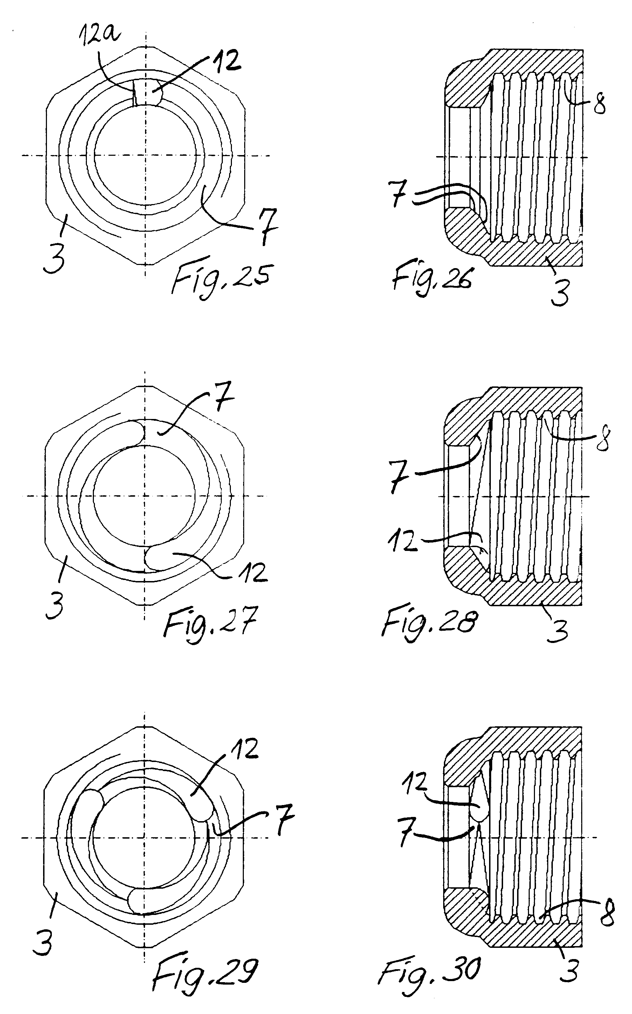

Auch in Fig.25 und 26 ist ein Ausführungsbeispiel gezeigt, bei welchem ein kugelsegmentförmiger Verformungskörper 12 durch einen steilen Abfall 12a begrenzt ist.

Beim Ausführungsbeispiel gemäß Fig.13 und 14 steht ein Verformungskörper 12 gegenüber der kreisringförmigen Druckfläche 7 etwa ballig beziehungsweise konvex gekrümmt vor. In Fig. 15 sind entsprechende Verformungskörper 12 gemäß Fig.13 einander an der Druckfläche unmittelbar benachbart und gleichmäßig am Umfang verteilt.

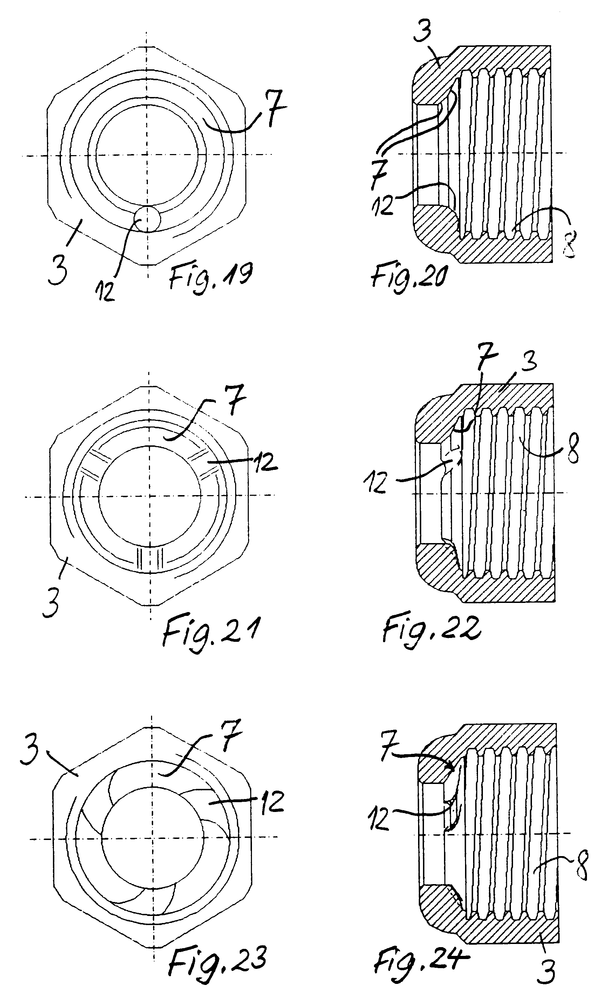

Der Verformungskörper 12 gemäß Fig.16 hat demgegenüber eine etwa geradlinige oder ebene Wirkfläche, die wie eine Sekante innenseitig über die Kontur der kreisringförmigen und dabei konischen Druckfläche 7 vorsteht. Fig.18 zeigt die Möglichkeit, mehrere solche flachen Verformungskörper 12 aneinanderzureihen und somit eine mehrkantförmige Innenkontur zu bilden, die auch zu einer entsprechend mehrkantförmigen Hüllkurve an der Innenseite der Klemmfinger 6 führt, wenn die Überwurfmutter 3 in Gebrauchsstellung gebracht ist.

Fig.19 zeigt einen kugelabschnittförmigen Verformungskörper 12, der also nach allen Seiten einen etwa gleichmäßigen Übergang schafft und vorzugsweise einen einzigen Klemmfinger ähnlich verformen kann, wie es Fig.2 zeigt.

Fig.21 und 22 zeigt die Möglichkeit, mit drei in ihrem jeweiligen Querschnitt etwa wulstförmige und stegförmige Verformungskörper 12 radial verlaufend an der konischen Druckfläche 7 vorzusehen.

In Fig.23 und 24 sind wiederum drei etwa wulstförmige und stegförmige Verformungskörper 12 vorgesehen, die zusätzlich aber gekrümmt sind.

Fig.27 bis 30 zeigen zwei bzw. drei sich sowohl allmählich gegenüber der Druckfläche erhöhende als auch verbreiternde Verformungskörper, so daß deren Ansicht die in Fig.27 und 29 erkennbare Kometenform hat.

Bezüglich des steilen Abfalles 12a sei anhand der Fig.11 und 25 noch erwähnt, daß er etwa parallel zu einer Durchmesserebene seitlich zu dieser versetzt angeordnet ist und eine durch seinen Bereich verlaufende Radialebene schräg in der Richtung schneidet, in der auch die Schlitze 9 zwischen den Klemmfingern im Querschnitt gesehen schräg verlaufen, so daß dieser steile Abfall 12a und die an ihm gebildete Kante wirkungsvoll an einem Klemmfinger angreifen kann, um ein ungewolltes Lösen der Überwurfmutter 3 zu verhindern.

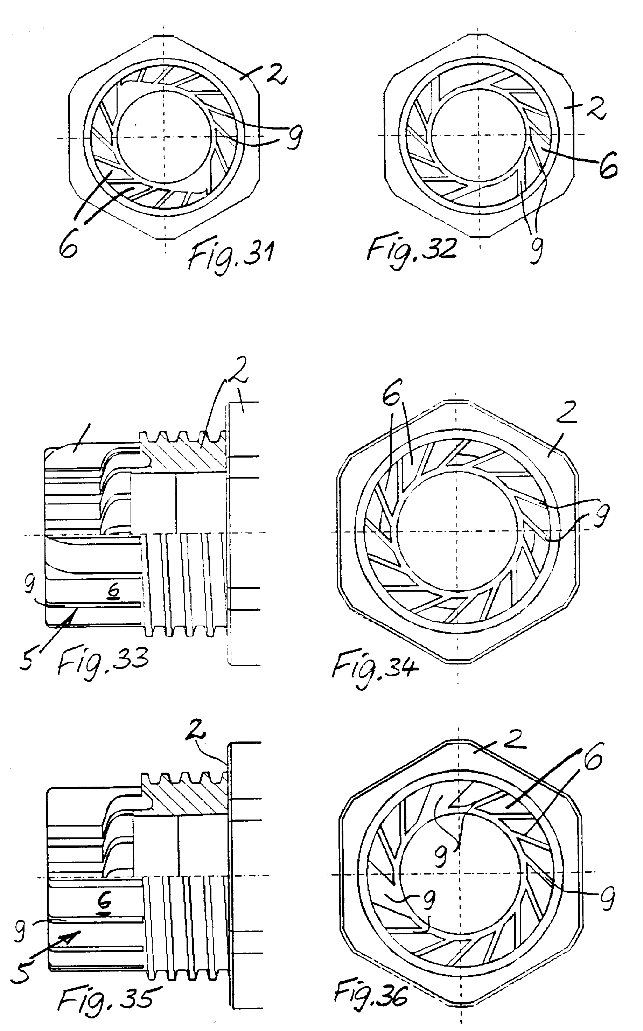

In den Figuren 31 bis 36 sind Schraubhülsen 2 mit einstückig an ihnen angeordneten Klemmeinsätzen 5 und Klemmfingern 6 dargestellt, an denen die Überwurfmuttern 3 der vorbeschriebenen Ausführungsbeispiele Verwendung finden könnten. Dabei ist jedoch zusätzlich vorgesehen, daß die Klemmfinger 6 an ihren der Oberfläche des Kabels 4 oder Schutzschlauches zugewandten Innenseiten und/oder ihren der Druckfläche 7 zugewandten Außenseiten untereinander Formabweichungen der Gestalt haben, daß die Hüllkurve der Innenseiten der Querschnitte der Klemmfinger 6 zumindest in verformter Position unrund ist, wobei Fig.31 die Möglichkeit zeigt, daß die Querschnitte der Klemmfinger in radialer Richtung gesehen unterschiedlich sind, so daß von vorneherein eine unrunde Form an ihrer Innenseite gegeben ist, während Fig.32 untereschiedlich breite Klemmfinger zeigt, so daß diese ein verschiedenes Verformungsverhalten zeigen.

Bei der Ausführungsform nach Fig.33 und 34 sind einzelne Klemmfinger an dem Übergang von der Stirnseite zur Außenseite mit einem größeren Radius gekrümmt, so daß sie entsprechend später von der Druckfläche 7 der Überwurfmutter 3 erfaßt und also auch entsprechend geringer verformt werden.

Fig.35 und 36 zeigt schließlich eine Möglichkeit, bei welcher der Schlitz 9 zwischen einzelnen benachbarten Klemmfingern 6 breiter als zwischen den übrigen Klemmfingern 6 ist, wobei dies bei Fig.36 dadurch realisiert ist, daß zwei Klemmfinger einfach weggelassen sind. Werden diese Klemmfinger 6 durch die Druckfläche 7 einer Überwurfmutter 3 beaufschlagt, ergibt sich aufgrund der unterschiedlichen Schlitzbreiten wiederum eine unterschiedlich starke radiale Verformung und somit in Gebrauchsstellung eine unrunde Hüllkurve an den Innenseiten der Klemmfinger-Querschnitte.

In vorteilhafter Weise können durch herstellungstechnisch einfache Maßnahmen bei Kabelverschraubungen 1 die gewünschten hohen Zugentlastungen mit herkömmlichen Gestaltungen der Klemmfinger und der Überwurfmuttern erzielt werden und gleichzeitig eine Verdrehsicherung der Kabel bewirkt werden, ohne daß dies eine Schwächung der Überwurfmutter 3 oder eine zu aufwendige Schlitzanordnung oder dergleichen zu Folge hätte. Auch das Anzugsmoment zum Festschrauben der Überwurfmuttern 3 wird kaum vergrößert, insbesondere dann, wenn der Verformungskörper 12 einen sehr allmählichen Übergang hat und/oder nur einen oder wenige Klemmfinger zusätzlich beaufschlagt.

Bei der Kabelverschraubung 1 mit Schraubhülse 2 und Gegenhülse, vorzugsweise Überwurfmutter 3 zum Anpressen eines aus Klemmfingern 6 bestehenden Klemmeinsatzes 5 gegen das Kabel 4 oder den Schutzschlauch ist zur Bildung einer unrunden Hüllkurve der Innenseiten der Querschnitte der Klemmfinger 6 vorgesehen, daß an einer eine sich verjüngende Form aufweisenden Druckfläche 7 der Gegenhülse oder Überwurfmutter 3 zumindest ein Verformungskörper 12 oder Höcker vorspringt, der in Umfangsrichtung eine solche Breite hat, daß er wenigstens einen Klemmfinger 6 mehr oder stärker als die Nachbarfinger radial nach innen verformt und somit eine Verdrehsicherung der Kabelverschraubung 1 gegenüber dem Kabel 4 oder dem Schutzschlauch bewirkt.

In Figur 9 und vorallem in Figur 10 erkennt man, daß die Druckfläche 7 auch mehrere - in diesem Falle zwei - in axialer Richtung benachbarter Abschnitte unterschiedlicher Konizität haben kann, wobei es dann zweckmäßig ist, wenn wir oder die Verformungskörper 12 über benachbarte derartige Abschnitte mit unterschiedlichen Konuswinkeln reichen und bevorzugt eine Breite haben, die der Gesamtbreite der aus unterschiedlichen Abschnitten bestehenden Druckfläche 7 etwa entspricht.

## Patentansprüche

1. Kabelverschraubung (1) mit einer Schraubhülse (2), einer damit verbindbaren Gegenhülse oder dergleichen Druckstück, insbesondere Überwurfmutter (3), und mit einem mit Hilfe der Gegenhülse gegen das Kabel (4) oder den Schutzschlauch preßbaren Klemmeinsatz (5), wobei die Gegenhülse den Klemmeinsatz (5) mit einer im wesentlichen ringartigen Druckfläche (7) zumindest an einer der Stirnseiten beaufschlagt oder übergreift und beim Anziehen des Gewindes (8) mit einer sich verjüngenden Form, zum Beispiel mittels Rundung oder mittels eines Konus, welche in der Schraubhülse oder anstelle der ringartigen Druckfläche (7) in der Gegenhülse angeordnet ist, einen mit axialen, an der Stirnseite mündenden Schlitzen (9) versehenen, Klemmfinger bildenden Bereich des Klemmeinsatzes radial gegen das Kabel (4) oder dergleichen hin verformt, wobei zwischen Klemmeinsatz (5) und Kabel (4) gegebenenfalls eine Dichtung (10) angeordnet ist, die von den durch die Schlitze (9) an dem Klemmeinsatz (5) gebildeten Klemmfingern (6) durch deren radiale Verformung gegen das Kabel (4) anpreßbar ist, und wobei die Hüllkurve der Innenseiten der Querschnitte der Klemmfinger (6) in Gebrauchsstellung unrund ist, dadurch gekennzeichnet, daß an der die sich verjüngende Form aufweisenden Druckfläche (7) zur Bildung der unrunden Hüllkurve der Klemmfinger (6) zumindest ein Verformungskörper (12) gegenüber dieser Druckfläche (7) vorspringt, der in Gebrauchsstellung wenigstens einen Klemmfinger (6) mehr oder stärker als einen oder die außerhalb des Bereiches des Veformungskörpers (12) angeordneten Nachbarfinger radial nach innen verformt festlegt.

2. Kabelverschraubung nach Anspruch 1, dadurch gekennzeichnet, daß der gegenüber der Druckfläche (7) vorspringende Verformungskörper (12) einen schrägen oder allmählichen Übergang von der Druckfläche (7) zu seiner höchsten Erhebung aufweist, welcher Übergang entgegen der Drehrichtung beim Anziehen des Gewindes ansteigt.

3. Kabelverschraubung nach Anspruch 1 oder 2, dadurch gekennzeichnet, daß der Verformungskörper (12) eine gegenüber der Ringform der Druckfläche (7) radial nach innen abweichende Oberfläche hat, die gegenüber der umlaufenden Ringform der Druckfläche einen größeren Krümmungsradius hat oder als im Querschnitt gesehen geradlinige Sekante oder Abflachung oder mit entgegengesetzter Krümmung ballig ausgebildet ist.

4. Kabelverschraubung nach einem der Ansprüche 1 bis 3, dadurch gekennzeichnet, daß der Verformungskörper (12) als teilkugelförmige Erhöhung oder als etwa radial verlaufender Steg mit in Drehrichtung bogenförmigem Querschnitt ausgebildet ist.

5. Kabelverschraubung nach einem der Ansprüche 1 bis 3, dadurch gekennzeichnet, daß der Verformungskörper (12) in Umfangsrichtung der ringförmigen Druckfläche verlaufend in Draufsicht etwa oval oder eiförmig und/oder mit gemäß der Zunahme der Erhöhung auch in der Breite zunehmender Form ausgebildet ist.

6. Kabelverschraubung nach einem der vorstehenden Ansprüche, dadurch gekennzeichnet, daß der Verformungskörper (12) als etwa in Umfangsrichtung der Druckfläche (7) verlaufender Wulst ausgebildet ist, dessen in Drehrichtung beim Festschrauben vorne befindlicher Bereich schräg oder gerundet von der Druckfläche (7) zu der größten Höhe des Verformungskörpers (12) übergeht.

7. Kabelverschraubung nach einem der Ansprüche 1 bis 6, dadurch gekennzeichnet, daß mehrere jeweils gleich oder unterschiedlich geformte Verformungskörper (12) am Umfang der konischen Druckfläche gleichmäßig oder mit unterschiedlichen Abständen zueinander angeordnet sind.

8. Kabelverschraubung nach einem der Ansprüche 1 bis 7, dadurch gekennzeichnet, daß der/die Verformungskörper (12) einstückig aus der Druckfläche (7) vorstehen.

9. Kabelverschraubung nach einem der Ansprüche 1 bis 8, dadurch gekennzeichnet, daß der/die Verformungskörper (12) an ihrer in Drehrichtung beim Festschrauben rückwärtigen Seite (12a) steil, insbesondere etwa unter 90 Grad oder unter spitzem Winkel gegenüber der Oberfläche und Oberseite des Verformungskörpers (12) abfällt (abfallen).

10. Kabelverschraubung nach Anspruch 9, dadurch gekennzeichnet, daß der steile Abfall (12a) des Verformungskörpers (12) etwa parallel zu einer Durchmesserebene seitlich zu dieser versetzt angeordnet ist und eine durch seinen Bereich verlaufende Radialebene schräg schneidet.

11. Kabelverschraubung nach einem der vorstehenden Ansprüche, dadurch gekennzeichnet, daß die Klemmfinger (6) an ihren der Oberfläche des Kabels (4) oder Schutzschlauches zugewandten Innenseite und/oder ihrer der Druckfläche (7) zugewandten Außenseite untereinander Formabweichungen der Gestalt haben, daß die Hüllkurve der Innenseiten der Querschnitte der Klemmfinger (6) zumindest in verformter Position unrund ist, und/oder daß der Schlitz (9) zwischen wenigstens zwei einander benachbarten Klemmfingern (6) breiter als zwischen den übrigen Klemmfingern (6) ist.

12. Kabelverschraubung nach einem der Ansprüche 1 bis 11, dadurch gekennzeichnet, daß die Druckfläche (7) Abschnitte oder Bereiche unterschiedlicher Konuswinkel aufweist und der Verformungskörper (12) über mehr als einen derartigen Abschnitt reicht.

## Claims

1. A screw-threaded cable fitting (1) including a threaded sleeve (2), a counter-sleeve (4) or similar member exerting pressure, particularly a cap nut (3), connectable thereto and further including a clamping insert (5) adapted to be pressed with the aid of the counter-sleeve against the cable (4) or against the protective sheath, wherein the counter-sleeve is applied to or engages over the clamping insert (5) with a substantially ring-like contact surface (7) at least at one of the faces and, as the thread (8) is tightened, deforms the clamping insert by a tapering shape, e.g. by means of curvature or by means of a cone, arranged in the threaded sleeve or instead of the ring-like contact surface (7) in the counter-sleeve, such deformation of the clamping insert being effected in an area thereof which is provided with axial slots (9) opening out at the face and forms clamping fingers and taking place radially towards the cable (4) or the like, wherein arranged between clamping insert (5) and cable (4) there may be a seal (10) adapted to be pressed against the cable (4) by the radial deformation of the clamping fingers (6) formed by the slots (9) on the clamping insert (5), and wherein the envelope curve of the insides of the cross sections of the clamping fingers (6) is non-circular in the position of use, **characterized in that** at least one deforming body (12) projects from the contact surface (7) of tapering shape for forming the non-circular envelope curve of the clamping fingers (6) and in the position of use radially inwardly deforms and locates at least one clamping finger (6) more or more intensively than neighbouring finger(s) arranged outside the area of the deforming body (12).

2. A screw-threaded cable fitting as claimed in claim 1, characterized in that the deforming body (12) projecting from the contact surface (7) has an oblique or gradual transition from the contact surface (7) to its highest elevation, which transition rises counter to the direction of turn when the thread is tightened.

3. A screw-threaded cable fitting as claimed in claim 1 or claim 2, characterized in that the deforming body (12) has a surface which differs radially inwardly from the ring shape of the contact surface (7) and has a larger radius of curvature or viewed in cross section takes the form of a straight secant or flattening or convexity of opposite curvature.

4. A screw-threaded cable fitting as claimed in any one of claims 1 to 3, characterized in that the deforming body (12) takes the form of a spherical protuberance or of an approximately radial web of a cross section which is arcuate in the direction of turn.

5. A screw-threaded cable fitting as claimed in any one of claims 1 to 3, characterized in that the deforming body (12) running in the circumferential direction of the ring-shaped contact surface is generally oval or egg-shaped in plan view and/or is of a shape increasing in width in accordance with the increase in elevation.

6. A screw-threaded cable fitting as claimed in any one of the preceding claims, characterized in that the deforming body (12) takes the form of a bead running generally in the circumferential direction of the contact surface (7), wherein the leading end area of the bead in the direction of turn when tightening the fitting has an oblique or rounded transition from the contact surface (7) to the maximum height of the deforming body (12).

7. A screw-threaded cable fitting as claimed in any one of claims 1 to 6, characterized in that a plurality of deforming bodies (12) of the same or different shape are evenly or unevenly spaced on the circumference of the conical contact surface.

8. A screw-threaded cable fitting as claimed in any one of claims 1 to 7, characterized in that the projecting deforming body(bodies) (12) are of one piece with the contact surface (7).

9. A screw-threaded cable fitting as claimed in any one of claims 1 to 8, characterized in that the trailing end (12a) of the deforming body (bodies) (12) in the direction of turn when tightening the fitting is steeply inclined, particularly at an angle of approximately 90° or at an acute angle, relative to the surface and top side of the deforming body (12).

10. A screw-threaded cable fitting as claimed in claim 9, characterized in that the steep inclination (12a) of the deforming body (12) is arranged approximately parallel to and offset from a diametral plane and intersects at a slant angle a radial plane running therethrough.

11. A screw-threaded cable fitting as claimed in any one of the preceding claims, characterized in that the clamping fingers (6) at the inside thereof facing the surface of the cable (4) or protective sheath and/or at the outside thereof facing the contact surface (7) differ in shape from one another in such a way that the envelope curve of the insides of the cross sections of the clamping fingers (6) is non-circular at least in the deformed position, and/or that the slot (9) between at least two adjacent clamping fingers (6) is wider than between the other clamping fingers (6).

12. A screw-threaded cable fitting as claimed in any one of claims 1 to 11, characterized in that the contact surface (7) has portions or zones with a different cone angle and the deforming body (12) extends over more than one such portion.

## Revendications

1. Elément de vissage (1) pour câble, avec une douille de vissage (2), avec une contre-douille ou élément de pression similaire, notamment un écrou à chapeau (3), pouvant être assemblé à cette douille, et avec une pièce d'insertion (5) pouvant être pressée à l'aide de la contre-douille contre le câble (4) ou la gaine de protection, la contre-douille sollicitant ou recouvrant la pièce d'insertion (5) par une face de pression (7) essentiellement annulaire sur au moins un de ses côtés frontaux et, lors du vissage du filetage (8), par une forme se rétrécissant, par exemple au moyen d'un arrondi ou au moyen d'un cône, qui est disposé dans la douille de vissage ou au lieu de la face de pression annulaire (7) dans la contre-douille, déformant radialement contre le câble (4) ou similaire une région de la pièce d'insertion qui est pourvue de fentes axiales (9) débouchant sur le côté frontal et forme des doigts de serrage, un joint d'étanchéité (10) étant éventuellement disposé entre la pièce d'insertion (5) et le câble (4), joint qui peut être pressé en application contre le câble (4) par les doigts de serrage (6) formés par les fentes (9) sur la pièce d'insertion (5), par la déformation radiale de ces doigts de serrage, et la courbe-enveloppe des côtés intérieurs des sections des doigts de serrage (6) n'étant pas ronde en position d'utilisation, **caractérisé** en ce qu'afin de former la courbe-enveloppe non ronde des doigts de serrage (6), au moins un corps de déformation (12) fait saillie de la face de pression (7) présentant la forme se rétrécissant, corps qui, en position d'utilisation, fixe au moins un doigt de serrage (6) en le déformant plus ou plus fortement radialement vers l'intérieur qu'un ou que les doigts voisins disposés en dehors de la région du corps de déformation (12).

2. Elément de vissage selon la revendication 1, **caractérisé** en ce que le corps de déformation (12) faisant saillie de la face de pression (7) présente une transition biaise ou progressive depuis la face de pression (7) jusqu'à son élévation maximale, transition qui est ascendante à l'encontre de la direction de rotation lors du vissage du filetage.

3. Elément de vissage selon la revendication 1 ou 2, **caractérisé** en ce que le corps de déformation (12) présente une surface divergeant radialement vers l'intérieur par rapport à la forme annulaire de la face de pression (7), surface qui possède un plus grand rayon de courbure par rapport à la forme annulaire circulaire de la face de pression, ou qui est réalisée sous la forme d'un méplat ou d'une sécante rectiligne en vue en coupe transversale, ou sous une forme bombée à courbure opposée.

4. Elément de vissage selon l'une des revendications 1 à 3, **caractérisé** en ce que le corps de déformation (12) est réalisé sous la forme d'une élévation en forme de sphère partielle, ou sous la forme d'une nervure s'étendant approximativement radialement à section arquée dans la direction de rotation.

5. Elément de vissage selon l'une des revendications 1 à 3, **caractérisé** en ce que le corps de déformation (12) est réalisé en s'étendant dans la direction circonférentielle de la face de pression annulaire avec, en vue de dessus, une forme approximativement ovale ou ovoïde et/ou avec une forme augmentant également en largeur conformément à l'augmentation de l'élévation.

6. Elément de vissage selon l'une des revendications précédentes, **caractérisé** en ce que le corps de déformation (12) est réalisé sous la forme d'un bourrelet s'étendant approximativement dans la direction circonférentielle de la face de pression (7), bourrelet dont la région se trouvant en avant dans la direction de rotation lors du vissage à fond assure une transition biaise ou arrondie depuis la face de pression (7) jusqu'à la plus grande hauteur du corps de déformation (12).

7. Elément de vissage selon l'une des revendications 1 à 6, **caractérisé** en ce que plusieurs corps de déformation (12) de formes respectives identiques ou différentes sont disposés régulièrement ou à intervalles différents les uns des autres sur la circonférence de la face de pression conique.

8. Elément de vissage selon l'une des revendications 1 à 7, **caractérisé** en ce que le ou les corps de déformation (12) dépassent d'un seul tenant de la face de pression (7).

9. Elément de vissage selon l'une des revendications 1 à 8, **caractérisé** en ce que le ou les corps de déformation (12), sur leur côté (12a) arrière dans la direction de rotation lors du vissage à fond, descendent en pente raide, notamment sous un angle d'environ 90 degrés ou sous un angle aigu par rapport à la surface et au côté supérieur du corps de déformation (12).

10. Elément de vissage selon la revendication 9, **caractérisé** en ce que la pente descendante raide (12a) du corps de déformation (12) est disposée environ parallèlement à un plan diamétral en étant décalée latéralement à ce dernier, et coupe en biais un plan radial s'étendant dans sa région.

11. Elément de vissage selon l'une des revendications précédentes, **caractérisé** en ce que les doigts de serrage (6) présentent des écarts de forme les uns par rapport aux autres sur leur côté intérieur tourné vers la surface du câble (4) ou de la gaine de protection et/ou sur leur côté extérieur tourné vers la face de pression (7), en ce que la courbe-enveloppe des côtés intérieurs des sections des doigts de serrage (6) est non ronde au moins en position déformée, et/ou en ce que la fente (9) entre au moins deux doigts de serrage (6) voisins est plus large qu'entre les autres doigts de serrage (6).

12. Elément de vissage selon l'une des revendications 1 à 11, **caractérisé** en ce que la face de pression (7) présente des parties ou régions d'angles de cône différents, et le corps de déformation (12) s'étend sur plus d'une telle partie.
